# EUROPEAN PATENT APPLICATION

(11) **EP 4 727 038 A1**
(43) Date of publication of application: **15.04.2026**
(21) Application number: 25206932.3
(22) Date of filing: 06.10.2025
(51) Int. Cl.: H04B 10/40, G02B 6/42

(54) **A SYSTEM AND METHOD FOR ENABLING A SOLDRABLE COMPACT MULTI-CHANNEL OPTICAL TRANSCEIVER MODULE WITH QFN PACKAGE**

(30) Priority: 08.10.2024 IN 202441076317
(71) Applicant: Lightspeed Photonics Pvt. Ltd., Hyderabad Telangana 500081 (IN)
(72) Inventor: Yeluripati, Rohin Kumar, 533255 Ramachandrapuram (IN); Pamidighantam, Ramana Venkata, 500094 Hyderabad (IN); Aare, Nikhil Kumar, 504302 Naspur (IN); Mohammed, Ubed, 506167 Hyderabad (IN); Jose, Jinin K, 500081 Hyderabad (IN); SG, Kiran, 500062 Hyderabad (IN)
(74) Representative: Nirwan, Prajwal

(57) **Abstract**

The present invention relates to a compact multi-channel optical transceiver system 100 configured for high-speed, bidirectional optical communication in a surface-mountable form factor. The system comprises a compact optical transceiver module **100A/100B** having a substrate 103 embedded with a driver integrated circuit **209A,** a transimpedance amplifier **209B,** a plurality of transmitter engines **207A,** a first plurality of receiver engines **207B,** and a microcontroller 201. High-speed electrical connectivity is achieved through embedded high-speed lanes **211A** and **211B,** and wire bonds. A Mechanical Optical Interface (MOI) 301 is positioned above the substrate for precise optical alignment. A ferrule 105 holds a plurality of optical fibers 107 in alignment with the MOI, and a clip 303 secures the ferrule to maintain stable optical coupling. The first end of the optical fibers interfaces with the MOI, while the second end connects to an external optical connector, enabling seamless integration with external optical systems.

## Description

### Technical Field of the Invention

The present invention relates to the field of high-speed optical transceivers. More specifically relating to the field of compact and modular transceiver module design for modern datacenters.

### Background of the Invention

In the field of co-packaged optics, which includes integrating optical and electronic components in close range within the same package, presents major challenges related to the form factor. When optical transceivers are integrated close to Application-Specific Integrated Circuits (ASIC) or FPGA, it causes significant heat generation within a limited space thereby making heat dissipation a critical challenge. Managing thermal load becomes difficult during high data rate transmission and requires compact design. High-speed transceivers must maintain signal quality over short distances which is difficult in densely packed modules. As data rates increase in these modules the problems associated with signal integrity, power consumption, and thermal management become more difficult.

Transceiver modules such as QSFP (Quad Small Form Factor Pluggable) and QSFP-DD (Quad Small Form Factor Pluggable Double Density) support high-data rates up to 800 Gbps, they often reduce system flexibility, making it difficult to replace individual components without affecting the entire unit. Scalability may be limited by physical space due to tight packing. Even though QSFP-DD modules are designed to maximize data rates within a compact form factor, because of the increased number of lanes and associated circuitry, it may cause more complex physical space-related difficulties. The modules may consume more power due to higher data rates and complex internal circuitry that are required to handle increased bandwidth. Hence there is a need for an optical interconnect module that supports high data rate, compact form factor to maximize space efficiency, robust solderable connections for reliable electrical contact, and durability combined with modularity that allows for unified integration and replacement.

### Object of the invention

The principal objective of the invention is to design a compact, solderable transceiver module design.

Another objective of the invention is to increase data transmission speed by enabling high-speed optical interconnectivity.

Another objective of the invention is to reduce power consumption, thereby improving system reliability and efficiency.

Another objective of the invention is to enhance modularity and compatibility in data centers.

### Summary of the Invention

To the enablement of the present disclosure and related ends, at least one aspect comprises the feature herein after completely described and particularly and/or specifically pointed out in the specification in the section of claims. The following drawings and descriptions outlined in detail enable certain example features of at least one aspect. Described features are indicative. However, a few of the many ways in which the following principles of various aspects may be employed, and this description is intended to include all such aspects and their equivalents.

In the present disclosure, the problem of larger space occupation and excessive power consumption by transceiver modules is solved by developing a modular, compact, solderable optical transceiver module. The existing transceivers face issues such as occupying larger space and consuming excess power, hence not being modular enough in high-speed data centers. In optical distribution networks, the problem is associated with potential losses or interference leading to inefficient encoding of transmitted data.

The high-speed data transmission in fiber-optic data communication systems requires more power and the existing transceiver modules such as QSFP and QSFP-DD consume more space when they are integrated into a printed circuit board (PCB). The invention provides a more compact and modular solution by allowing the mounting of Vertical Cavity Surface Emitting Lasers (VCSELs) and the driver components in a smaller and more efficient way that also includes a mechanism for faster heat dissipation which is very important in optical transceivers that generate significant heat during operation. Thereby enhancing the speed, modularity, and power efficiency of optical transceivers used in data centers and other high-speed networking environments.

This summary provided herein is to introduce a section of concepts in a simple and clear form which are further described in the Detailed Description. This summary provided herein is not intended to particularly identify key features or essential features of the claimed invention or subject matter, nor is it intended to be used as support or as an aid in determining the scope of the claimed subject matter.

The above summary is descriptive and exemplary only and is not intended to be restricted in any way. In addition to the descriptive aspects, embodiments, and features described in the above summary, further features and embodiments will become apparent by reference to the accompanied drawings and the following detailed description.

### Brief Description of Drawings

The foregoing and other features of embodiments will become more apparent from the following detailed description of embodiments when read in conjunction with the accompanying drawings. In the drawings, like reference numerals refer to like elements.

In the following description, for the purposes of explanation, numerous specific details are set forth to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form to avoid unnecessarily obscuring the embodiment of the invention.
**FIGs.1A-1B** illustrate a network and a system diagram, for representing system architecture for data communication involving a plurality of components, according to one example of the embodiment.
**FIGs.2A-2B** illustrate diagrams for representing the assembly of substrate on which photodetector (PD), Vertical Cavity Surface Emitting Lasers (VCSELs), driver IC and TIA is attached and interlinked using wire wound, according to one example of the embodiment.
**FIGs.3A-3C** illustrate diagrams representing components of the compact multi-channel optical transceiver module using QFN package such as substrate, MOI, ferrule and clip, according to one example of the embodiment.
**FIGs.4A-4C** illustrate diagrams representing components of the compact multi-channel optical transceiver module using QFN package such as substrate, MOI, ferrule and clip, and a method for high-speed optical data transmission using a compact multi-channel optical transceiver module (**100A/100B**), according to one example of the embodiment.
**FIGs.4D-4F** illustrate images representing the roadmap of optical interconnect technologies, according to one example of the embodiment.
**FIG.4G** illustrating a flowchart representing a method for compact multi-channel optical transceiver module, according to one example of the embodiment.
**FIGs.5A-5C** illustrate graphs representing a form factor and integration efficiency comparison, data rate and bandwidth efficiency comparison, and supporting data to compact multi-channel optical transceiver module using QFN package, according to one example of the embodiment.

### Detailed Description of the Invention

Reference will now be made in detail to the description of the present subject matter, one or more examples of which are shown in the figures. Each example is provided to explain the subject matter and not a limitation. Various changes and modifications obvious to one skilled in the art to which the invention pertains are deemed to be within the spirit, scope, and contemplation of the invention.

To facilitate the enablement of the present disclosure and its associated embodiments, at least one aspect comprises the features and functions that are fully described hereinafter and particularly claimed in the detailed specification. The associated drawings and descriptions illustrate exemplary features of the invention and are intended to showcase possible implementations of the disclosed system. The invention broadly relates to a high-speed data transmission solution and specifically to a compact multi-channel optical transceiver system 100, which achieves high signal fidelity, energy efficiency, and mechanical simplicity using a standardized QFN package integration technique.

The disclosed system addresses the challenges of optical interconnects in modern data centers and high-performance computing environments by providing a surface-mount transceiver that supports both transmitting and receiving engines using VCSELs and photodetectors, respectively. The compact multi-channel optical transceiver system **100** includes multichannel optical communication capabilities, supporting four transmission channels and four reception channels. This bidirectional architecture enables full-duplex communication with minimal form factor overhead. The QFN package with a central thermal pad ensures low parasitic inductance and optimized thermal management in optoelectronics, enhancing long-term stability and reducing heat accumulation under continuous high-speed operation.

Furthermore, the compact multi-channel optical transceiver system **100** supports integration with compact fiber-optic modules, such as MPO-12 connectors and USCONEC PRIZM^{®} LightTurn^{®} interfaces. The solderable optical engine may be placed directly onto PCBs through standard SMT processes, eliminating the need for bulky pluggable transceivers. By combining data center connectivity needs with a miniaturized and scalable architecture, the present invention delivers a next-generation solution for high-speed optical communication that meets demanding bandwidth, thermal, and reliability standards while maintaining cost-effective manufacturability and system modularity.

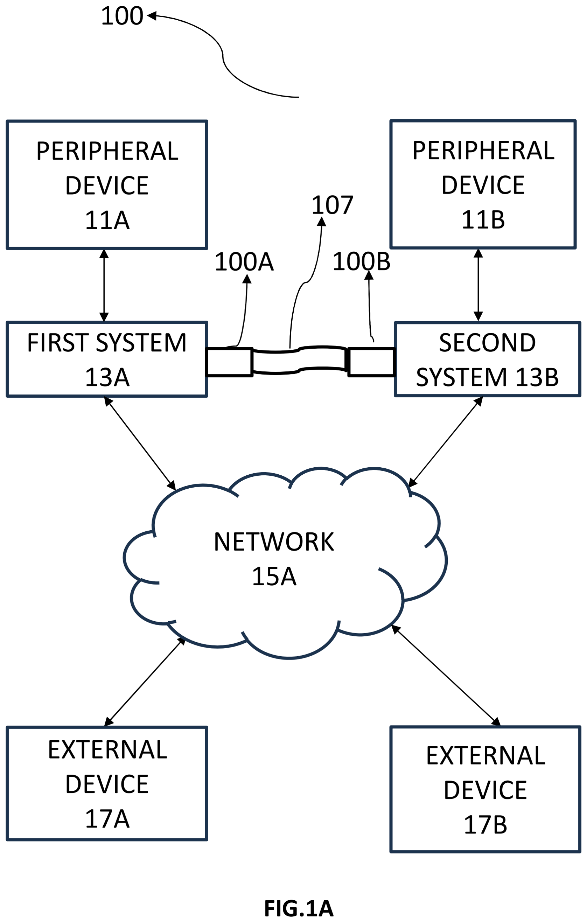

**FIGs.1A-1B** illustrate a network and a system diagram, for representing system architecture for data communication involving a plurality of components, according to one example of the embodiment.

**FIG.1A** first system **13A** and second system **13B** represent devices such as switches, routers, or high-performance compute nodes. These systems are equipped with compact multi-channel optical transceiver module **100A** and **100B** respectively.

**FIG.1A** depicts a sample deployment architecture of a compact multi-channel optical transceiver module **100,** intended to facilitate high-speed, low-power, and space-efficient optical connections between electronic systems. The architecture is made up of two main systems such as first system **13A** and second system **13B,** each connected to their corresponding versions of the optical transceiver module, referred to as **100A** and **100B.** These transceiver modules are directly attached to the system PCBs through standard QFN-compatible surface mount techniques. By employing high-speed optical interconnections rather than conventional electrical connections, the system greatly minimizes transmission loss, power usage, and signal integrity deterioration, particularly in short-distance, high-bandwidth scenarios such as intra-rack or board-to-board communication within data centers.

Every system connects to a peripheral device **11A** and **11B,** which can consist of line cards, optical amplifiers, or pluggable modules, ensuring backward compatibility and enhanced capabilities as needed. The Network segment **15A** serve as optical switching fabrics or backplane interconnects in the infrastructure, enabling data routing among various systems or nodes. represents a fiber-optic infrastructure that connects various co-packaged optics-enabled systems maybe but not limited to switches, servers, and storage units in data centers. It may be but not limited to include complex wavelength-division multiplexing networks that carry multiple optical signals over a single fiber or a high bandwidth optical mesh network that interconnects multiple co-packaged systems. The network ensures that data from the co-packaged optical system is efficiently routed to external systems or between nodes of cloud data centers.

These network sections link to external devices **17A** and **17B,** including remote servers, compute clusters, or storage units facilitating effective data transfer in distributed computing settings. The integration of compact optical transceiver module **100A/100B** in these configurations offers advantages such as lower latency, improved thermal efficiency, and a notably smaller size compared to conventional QSFP or OSFP pluggable optics.

First system **13A** and second system **13B,** may represent a high-performance switch or processor with co-packaged optical transceivers. The system is responsible for reducing the distance that plurality of electrical signals must travel before being converted to a plurality of optical signals thereby reducing power consumption and improving bandwidth. The system manages high-speed data transmission and routing in data centers. A plurality of optical fibers **107** represents a short-reach optical interconnect or series of optical fibers that connects the co-packaged transmitter/receiver in the first system **13A** and second system **13B** to external components **300** such as other optical transceivers or optical switches. The channel may be a fiber array or silicon photonic waveguides that transmit data in the form of light over short distances with limited power loss. The optical interconnects enable high-density data communication between chips and boards inside high-performance systems such as switches or routers.

The miniaturized multi-channel optical transceiver module **100A/100B** houses crucial optoelectronic elements such as VCSELs (Vertical Cavity Surface Emitting Lasers), photo detectors, driver ICs, TIAs (Transimpedance Amplifiers), microcontroller, lens integrated cap and ferrule in a compact QFN package. This facilitates high-density optical signal transmission and reception with data rates surpassing 100 Gb/s per channel, all while taking up minimal PCB space. Additionally, the module is designed for effective thermal dissipation, high MTBF reliability, and works with standard fiber interfaces such as MPO-12 through clip-on connectors. **FIG.1A** consequently, illustrates not just the module's functional integration within practical networking situations but also emphasizes its importance in facilitating scalable and highly efficient optical communication in future computing and storage systems.

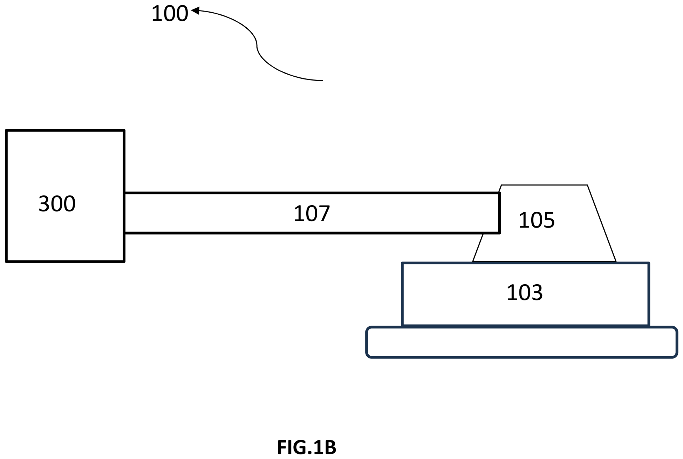

**FIG.1B** illustrates a structural side view representation of the integration mechanism for the compact multi-channel optical transceiver module **100A/100B** with a printed circuit board (PCB) and associated optical interfacing components. At the base is the PCB **101,** which provides electrical and mechanical support for the transceiver assembly. Mounted on top of the PCB is the substrate **103,** which serves as the immediate platform for mounting various optoelectronic components including VCSELs, photodetectors, and ICs such as drivers and TIAs. The substrate **103** is designed with conductive routing and thermal dissipation features to support high-speed data operation and heat management.

Mounted above the substrate is a ferrule **105** which is essential for aligning and securing the optical fibers to ensure accurate signal transmission. The optical fiber **107** stretches from the ferrule, enabling the directed passage of light signals to and from the transceiver module. This alignment is crucial for reducing optical losses and preserving signal integrity. The ferrule could be included in a clip-on assembly, which is compatible with MPO-12 or comparable multimode connectors, guaranteeing standardized connections and simplicity of installation.

The ferrule **105** assembly connects the transceiver module to the optical fiber **107.** It contains integrated VCSELs and photodetectors, which convert a plurality of electrical signals into a plurality of optical signals and the other way around. The module links to the entire system via electrical traces laid out on the substrate **103** and the PCB **101.** This setup allows for a solderable, compact, and high-bandwidth optical connection, perfect for high-performance data center settings where space, thermal efficiency, and fast communication are essential. The illustration clearly shows how the transceiver module is smoothly incorporated onto the board and positioned along the optical communication path for optimal performance.

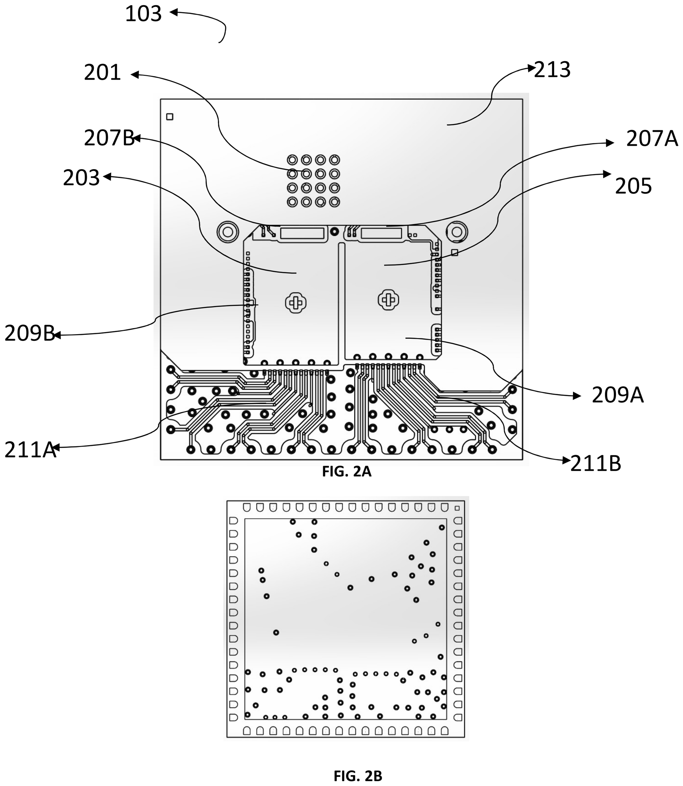

**FIGs.2A-2B** illustrate diagrams for representing the assembly of substrate on which photodetector (PD), Vertical Cavity Surface Emitting Lasers (VCSELs), driver IC and TIA is attached and interlinked using wire wound, according to one example of the embodiment.

**FIG.2A** presents a top-down view of the internal layout of the compact multi-channel optical transceiver module on a substrate **103.** This figure illustrates the spatial organization and interconnection of critical components that collectively form the high-speed optical communication engine. A plurality of transmitting engines **207A** such as Vertical Cavity Surface Emitting Lasers (VCSELs) function as a plurality of transmitting engines **207A,** emitting modulated light signals across four separate transmission channels. These VCSELs are driven by the Driver IC **209A,** which receives a plurality of electrical input signals and converts them into modulation patterns suitable for optical transmission. These modulated optical signals are then routed toward the fiber interface through high-speed pathways **211A/211B,** ensuring minimal distortion and signal loss. The VCSEL and driver pair operate in tandem to enable high-speed data output with precision, forming the core of the module's optical transmission unit.

In parallel, a plurality of receiver engine such as Photodetectors **207B** represent the receiving engine of the system, responsible for capturing incoming optical signals and converting them back into electrical form. These signals are received across four independent receiver channels and are typically weak upon arrival. Therefore, the Transimpedance Amplifier (TIA) **209B** is positioned next to the photodetectors to amplify these signals to usable voltage levels, ensuring signal integrity and sensitivity. This amplification enables the system to maintain performance even in environments with lower signal strength or noise. The precise alignment and interconnection between the photodetectors and the TIA are essential for supporting high-speed, reliable data reception.

Also included in **FIG. 2A** is a Microcontroller **201,** which manages overall operation, diagnostics, and power control of the module. It supervises both the transmit and receive operations, performing real-time adjustments as needed. A plurality of wire bonds **205** and interconnect lanes **211A/211B** connect these components on the substrate **103,** while Ground **213** provides a stable reference potential for noise suppression and thermal grounding. This highly integrated layout enables the module to operate across 4 Tx and 4 Rx channels simultaneously, offering full-duplex communication. **FIG. 2B****,** shown below, displays the bottom view of the assembled transceiver package, highlighting the contact pads compatible with standard QFN soldering for surface mounting onto a PCB. This ensures easy integration into host systems while maintaining electrical and thermal performance through direct PCB contact.

A substrate **103,** configured to embed and support a plurality of components, wherein the plurality of components includes, a driver integrated circuit **209A,** embedded within the substrate **103,** and configured to configured to modulate a plurality of electrical input signals into a plurality of modulated output signals. A transimpedance amplifier **209B,** embedded within the substate **103** and configured to amplify a plurality of electrical signals generated from a plurality of detected optical signals. A plurality of transmitter engines **207A,** embedded within the substrate **103,** and operatively coupled to the driver integrated circuit **209A,** each transmitter engine configured to emit an optical signal in response to a corresponding modulated electrical signal from the driver integrated circuit **209A.** A plurality of receiver engines **207B,** embedded within the substrate **103,** and operatively coupled to the transimpedance amplifier **209B,** each photodetector being configured to receive a plurality of optical signals and convert it into a corresponding plurality of electrical signals. A microcontroller **201,** embedded within the substrate **103,** and configured to monitor and control the operational states of the driver integrated circuit **209A,** transimpedance amplifier **209B,** the plurality of transmitter engines **207A,** and the plurality of receiver engines **207B.**A first plurality of high-speed lanes **211A,** embedded within the substrate **103,** configured to electrically interconnect the driver integrated circuit **209A** with the plurality of transmitter engines **207A.**

A second plurality of high-speed lanes **211B,** embedded within the substrate **103,** configured to electrically interconnect the transimpedance amplifier **209B** with the plurality of photodetectors **207B.** A plurality of wire bonds, configured to electrically couple the plurality of components embedded on the substrate **103,** wherein the wire bonds include connections between a plurality of transmitter engines **207A,** the plurality of receiver engines **207B,** the driver integrated circuit **209A,** the transimpedance amplifier **209B,** and the microcontroller **201.** A ground **213,** integrated into the substrate **103,** configured to provide signal reference and facilitate thermal dissipation. A Mechanical Optical Interface (MOI) **301,** positioned on or above the substrate **103,** and configured to provide mechanical alignment between the plurality of transmitter engines **207A** and the plurality of receiver engines **207B,** and a plurality of optical fibers **107.A** ferrule **105,** configured to hold and align the plurality of optical fibers **107** in optical alignment with the Mechanical Optical Interface (MOI) **301.A** fiber clip **303,** configured to retain the ferrule **105** in fixed mechanical and optical alignment with the Mechanical Optical Interface (MOI) **301,** thereby ensuring stable optical coupling between the plurality of optical fibers **107** and the optoelectronic components embedded in the substrate **103**. Wherein the first end of the plurality of optical fibers **107** is inserted into and positioned by the ferrule **105,** and optically aligned through the Mechanical Optical Interface (MOI) with the plurality of transmitter engines **207A** and the plurality of photodetectors **207B** and second end of the plurality of optical fibers **107** connected to an external optical connector **300,** configured to interface with an external optical communication system.

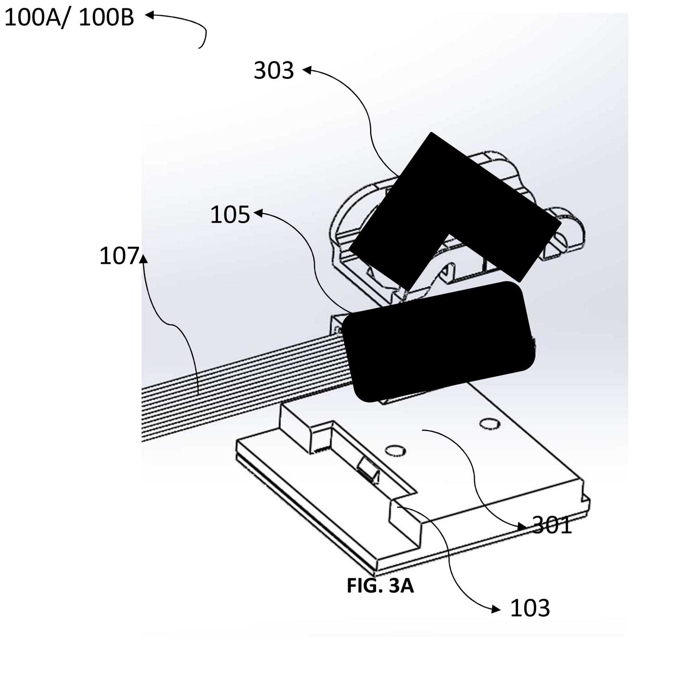

**FIGs.3A-3C** illustrate diagrams representing components of the compact multi-channel optical transceiver module using QFN package such as substrate, MOI, ferrule and clip, according to one example of the embodiment.

**FIG.3A** presents a semi-transparent perspective view showing the transceiver module **100A/100B** mounted on a substrate **103,** which is placed on a base PCB (not labeled but represented by the structural support below). The substrate hosts all optoelectronic components such as VCSELs and photodetectors, which communicate optically through the ferrule **105** aligned with the optical fiber **107.** A fiber clip **303** securely holds the ferrule and fiber in place to ensure precise optical alignment and mechanical stability. This assembly enables direct optical coupling with minimal insertion loss while maintaining a compact and thermally efficient layout.

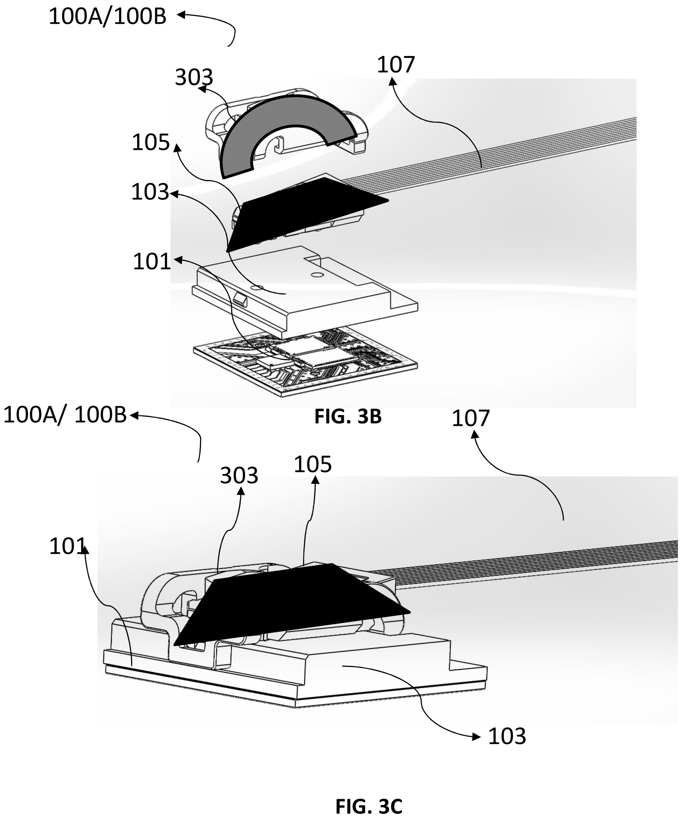

**FIG. 3B** offers an exploded view of the same assembly, clearly illustrating the sequential placement of each component. From bottom to top, the diagram includes the PCB **101,** on which the substrate **103** is mounted. Above the substrate is the ferrule **105,** which aligns the ends of the fiber ribbon **107** with the optoelectronic elements on the substrate. The fiber clip **303** sits above the ferrule, acting as a mechanical retainer that locks the fiber into position. This modular design allows for simplified integration using standard SMT processes and facilitates quick attachment/detachment of fiber connectors **300,** making the system suitable for high-density optical interconnects in data centers and high-performance computing environments.

**FIG.3C** displays the fully assembled structure, showing the completed interconnection of the fiber **107,** ferrule **105,** substrate **103,** and PCB **101,** with the fiber clip **303** holding everything in place. The components are precisely aligned for efficient optical transmission and reception across multiple channels, supporting the compact multi-channel architecture. This design ensures mechanical robustness, thermal performance, and optical precision, enabling the transceiver module to operate reliably under high-speed and high-bandwidth demands. The visual representation across these figures effectively highlights the plug-and-play nature and compact integration of the optical engine within an electronic system.

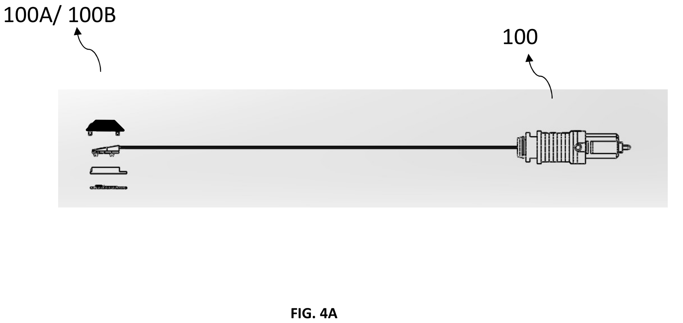

**FIGs.4A-4C** illustrate diagrams representing components of the compact multi-channel optical transceiver module using QFN package such as substrate, MOI, ferrule and clip, according to one example of the embodiment.

**FIG.4A** presents an exploded side view of the complete optical connection assembly. This diagram highlights the sequential alignment of components that form the end-to-end optical interconnection. From left to right, we see the elements involved in fiber alignment and retention (likely including the fiber clip, ferrule, and alignment fixtures), leading into the optical fiber, which runs longitudinally to the right. The fiber connects to a standard multimode optical connector **300** (likely an MPO or PRIZM^{®} LightTurn^{®} type) at the far end. This layout ensures that the fiber can be reliably connected and detached from the transceiver module **100A/100B,** maintaining alignment and minimizing insertion loss. The visual breakdown in this view emphasizes ease of assembly and modularity for integration into high-performance systems.

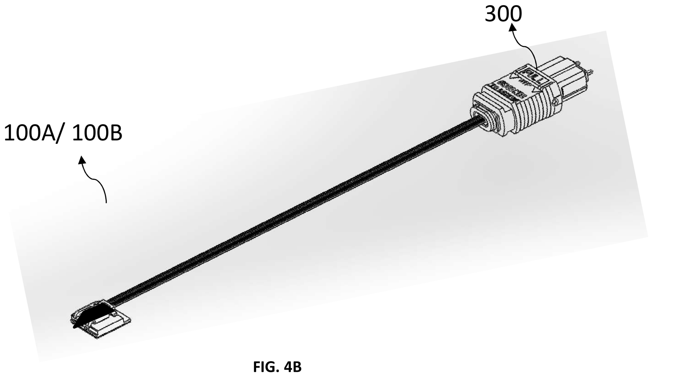

**FIG. 4B** shows the assembled perspective view of the entire optical pathway, from the transceiver module **100A/100B** to the fiber connector **300** at the far end. Here, the fiber is securely clamped onto the substrate via a ferrule and clip mechanism, providing direct optical coupling to the transmitting (VCSELs) and receiving (photodetectors) elements mounted on the module. The cable extends out and terminates in a high-density MPO-style connector, enabling straightforward interfacing with optical backplanes, patch panels, or other system nodes. This view demonstrates how the compact transceiver module integrates with industry-standard fiber infrastructure, achieving high-speed, low-loss optical communication in a solderable form factor.

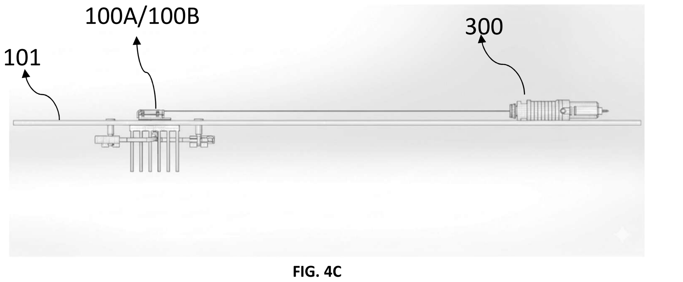

**FIG. 4C** illustrates a side cross-sectional view of the entire optical assembly in its final mounted state on a PCB **101.** The compact transceiver module **100A/100B** is soldered onto the PCB, with the optical fiber running horizontally across the system. The center of the diagram shows the module's coupling interface-where the ferrule aligns the fiber with the internal optical engines. The far end shows the terminated fiber connector **300.** This view is crucial for understanding the physical alignment of the transceiver relative to the PCB and external cabling, confirming that the design supports low-profile integration with efficient thermal and mechanical handling. It also highlights the advantage of using a standard QFN package for the module, enabling surface mount compatibility and dense placement in network or compute environments.

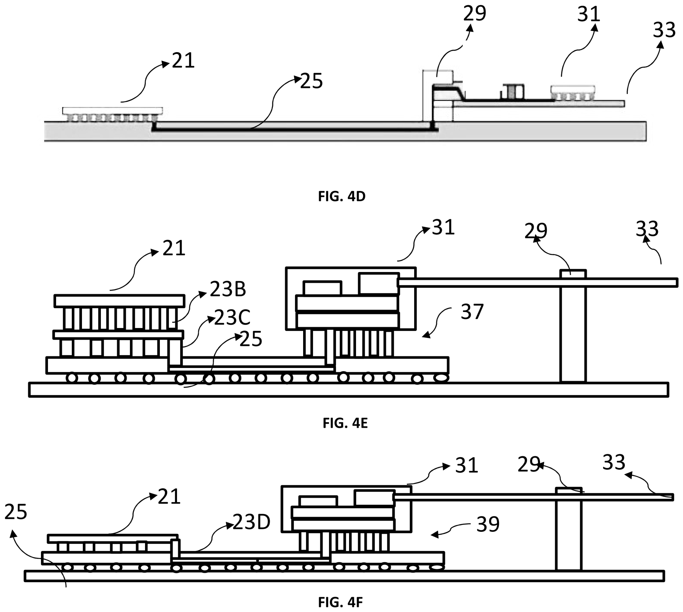

**FIGs.4D-4F** illustrate images representing the roadmap of optical interconnect technologies, according to one example of the embodiment.

The images illustrate the evolution of optical interconnect technologies, showcasing a transition from Pluggable Optics to On-Board Optics (OBO), Near-Packaged Optics (NPO), and Co-Packaged Optics (CPO), with a future roadmap leading to 3D Co-Packaged Optics (CPO). Each stage represents increasing levels of integration between optics and switch ASICs, which results in improved performance, miniaturization, and efficiency.

**FIG.4D** represents Pluggable Optics as the current state of optical interconnects. In this design, the ASIC **21** (Application-Specific Integrated Circuit) and optical transceiver module **31** are connected via copper traces **27** on the host PCB **25.** The transceiver module **31** uses a QSFP connector **29,** which is a common interface for high-speed data transmission. This design, though widely used today, relies on removable, pluggable modules, which offer flexibility but are not as compact or efficient as future solutions like CPO.

**FIG.4E** represents Near-Packaged Optics (NPO), for the period 2020-2026, places the optical engine and the ASIC in close proximity, but they remain separate, with a distance of approximately 150 mm. Despite this, NPO can still achieve CPO-equivalent performance by utilizing high-performance components such as VCSELs (Vertical Cavity Surface Emitting Lasers), TIAs (Transimpedance Amplifiers), and advanced driver ICs. These components ensure low signal loss, high-speed data transmission, and effective thermal management, which are crucial for overcoming the challenges posed by the separation between the optical engine and the ASIC.

**FIG.4F** represents Co-Packaged Optics (CPO), shown in the roadmap for 2022-2032, integrates the optical engine and switch ASIC within the same package, typically reducing the distance between components to 50 mm. This close integration provides benefits such as improved signal integrity, thermal dissipation, and power efficiency. The reduced interconnect distance in CPO systems eliminates many of the signal integrity and heat management issues that arise in NPO configurations. However, the tight integration in CPO often leads to increased complexity, higher power consumption, and limitations on scalability due to the dense packaging.

According to an example embodiment of the invention, the compact multi-channel optical transceiver system **100** exhibits a system-level insertion loss performance comparable to Co-Packaged Optics (CPO) architectures. The substrate material utilized in the compact multi-channel optical transceiver system **100** package represents an estimated electrical insertion loss of less than 3 dB per inch at an operational frequency of 36 GHz. In comparison, conventional high-speed substrate materials such as FR4, Megtron 7, and Tachyon A100 exhibit higher insertion losses and operate at comparatively lower frequencies. The optical pathway, including the Mechanical Optical Interface (MOI), ferrule alignment, fiber interconnection, and external optical connectors, contributes an additional optical coupling loss typically ranging between 1.5 dB and 2.0 dB .

Accordingly, the cumulative system-level insertion loss, including both electrical and optical domains, is maintained within approximately 4.5 dB to 5.0 dB. This integrated loss profile enables the compact multi-channel optical transceiver system **100** to achieve high-speed, low-loss data communication performance substantially equivalent to CPO-based systems, while retaining modularity, surface-mount integration capability, and ease of system assembly. The resulting architecture combines the advantages of minimized signal degradation, reduced power consumption, and scalable manufacturability, thereby addressing critical challenges faced by conventional pluggable transceiver solutions and tightly integrated co-packaged designs.

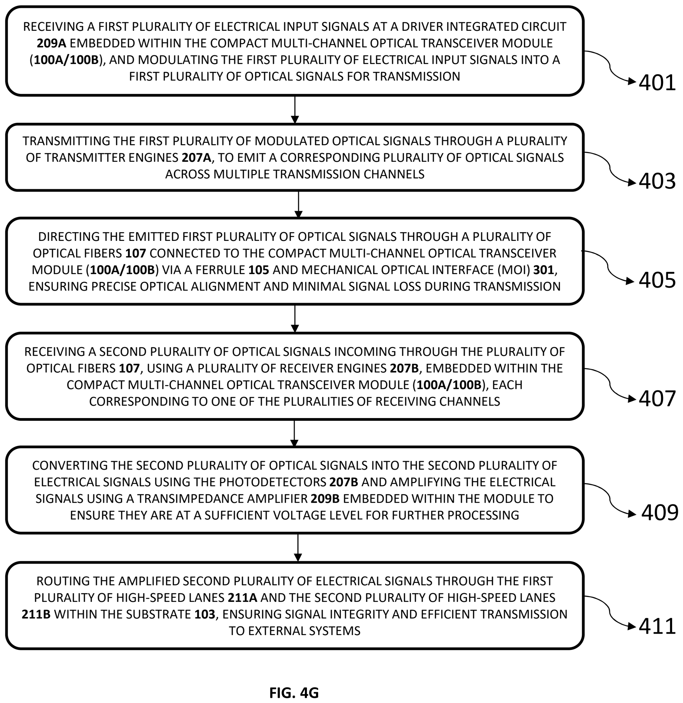

**FIG.4G** illustrate a flowchart representing a method for high-speed optical data transmission using a compact multi-channel optical transceiver module, according to some example embodiments.

At step **401,** the method includes receiving a plurality of electrical input signals at a driver integrated circuit **209A** embedded within the compact multi-channel optical transceiver module **100A/100B,** and modulating the plurality of electrical input signals into a plurality of optical signals for transmission. An initial set of electrical input signals is obtained at a driver integrated circuit **209A,** which is incorporated within the compact multi-channel optical transceiver module **100A/100B.** These electrical signals are subsequently transformed into an initial set of optical signals for transmission. This procedure entails transforming a plurality of incoming electrical signals into optical signals, allowing them to be sent via the optical pathways of the module.

At step **403,** the method includes transmitting the first plurality of modulated optical signals through a plurality of transmitter engines **207A,** to emit a corresponding plurality of optical signals across multiple transmission channels. The initial set of modulated optical signals is sent via multiple transmitter engines **207A,** like VCSELs (Vertical Cavity Surface Emitting Lasers). These transmitting engines release the appropriate number of optical signals through various transmission channels, which are utilized to transmit data over optical fibers.

At step **405,** the method includes directing the emitted first plurality of optical signals through a plurality of optical fibers **107** connected to the compact multi-channel optical transceiver module (**100A/100B**) via a ferrule 105 and mechanical optical interface (MOI) **301,** ensuring precise optical alignment and minimal signal loss during transmission. The emitted array of optical signals is routed through optical fibers **107,** linked to the transceiver module through a ferrule **105** and mechanical optical interface (MOI) **301.** This arrangement guarantees that the optical signals are accurately positioned, decreasing signal loss and maintaining minimal interference throughout transmission. The alignment and integrity of the optical connection are essential for ensuring high-speed data transmission.

At step **407,** the method includes receiving a second plurality of optical signals incoming through the plurality of optical fibers **107,** using a plurality of receiver engines **207B,** embedded within the compact multi-channel optical transceiver module **100A/100B,** each corresponding to one of the pluralities of receiving channels. The transceiver module accepts the second set of optical signals arriving via the optical fibers **107.** These incoming optical signals are received by multiple receiver engines **207B,** which are likewise integrated within the transceiver module **100A/100B.** Every receiver engine is linked to one of the receiving channels and is tasked with transforming the optical signals into electrical signals for additional processing.

At step **409,** the method includes converting the second plurality of optical signals into the plurality of electrical signals using the photodetectors **207B** and amplifying the electrical signals using a transimpedance amplifier **209B** embedded within the module to ensure they are at a sufficient voltage level for further processing. Once the incoming optical signals are received, the next step involves converting the second plurality of optical signals into electrical signals using the photodetectors **207B** embedded in the module. These electrical signals are then amplified using a transimpedance amplifier **209B,** which ensures that the signals are at a sufficient voltage level for further processing.

At step **411,** the method includes routing the amplified second plurality of electrical signals through the first plurality of high-speed lanes **211A** and the second plurality of high-speed lanes **211B** within the substrate **103,** ensuring signal integrity and efficient transmission to external systems. The boosted electrical signals are directed through high-speed paths **211A** and additional high-speed paths **211B** in the substrate **103** of the module. These connections guarantee that the electrical signals retain their integrity and are effectively sent to external systems for additional data processing or transmission.

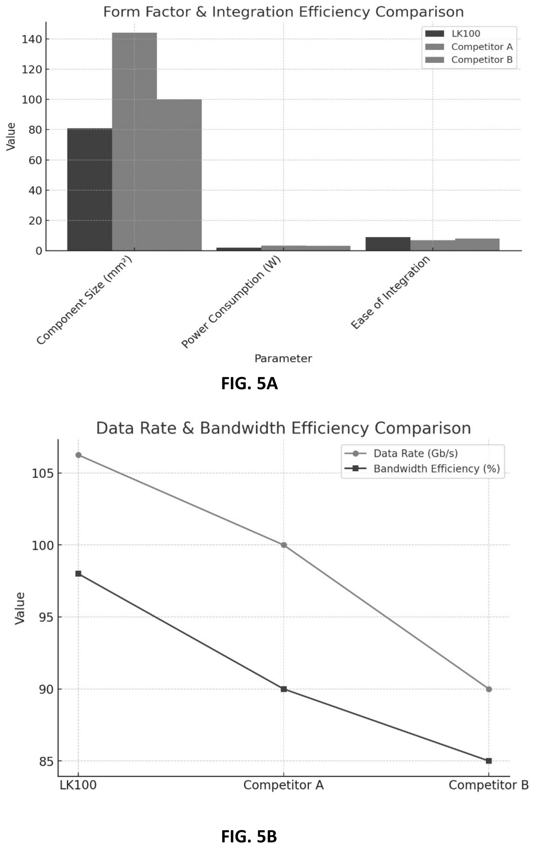

**FIGs.5A-5C** illustrate graphs representing a form factor and integration efficiency comparison, data rate and bandwidth efficiency comparison, and supporting data to compact multi-channel optical transceiver module using QFN package, according to one example of the embodiment.

**FIG. 5A** presents a comparative bar chart highlighting the Form Factor and Integration Efficiency of the compact multi-channel optical transceiver module 100 against two existing technologies, Competitor A and Competitor B. The comparison includes Component Size, Power Consumption, and Ease of Integration. The module 100 exhibits the smallest footprint (81 mm²), significantly more compact than Competitor A (144 mm²) and Competitor B (100 mm²). It also operates at a lower power level (~2W), making it highly efficient for energy-sensitive applications. Thanks to its standard QFN solderable package, the module 100 enables seamless surface-mount integration, outperforming other solutions that may require larger or pluggable interfaces.

**FIG. 5B** illustrates a comparative line chart focusing on Data Rate and Bandwidth Efficiency. The compact multi-channel optical transceiver module 100 supports 106.25 Gb/s PAM4 per channel, outperforming both competitors. Its architecture enables a bandwidth efficiency of approximately 98%, higher than Competitor A (~90%) and Competitor B (~85%). This makes the module 100 ideal for high-throughput networking environments, enabling optimized utilization of the optical link with minimal loss and greater data density a key advantage in modern data centers and optical backplane interconnects.

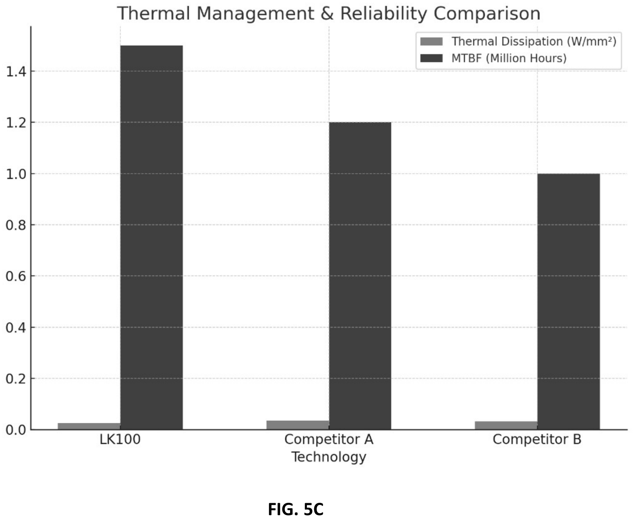

**FIG.5C** displays a bar chart comparing thermal management and reliability among the three technologies. The compact multi-channel optical transceiver module **100** maintains a low thermal dissipation (~0.025 W/mm²), which is critical in densely populated electronics environments. This is achieved through its thermally optimized QFN layout, including a central thermal ground pad. Additionally, the module boasts a Mean Time Between Failures (MTBF) of 1.5 million hours, indicating high operational reliability and long service life, significantly surpassing Competitor A (1.2 million hours) and Competitor B (1.0 million hours). These factors combined reinforce the system's viability for robust, long-term deployment in high-performance computing and communication systems.

According to some example embodiments, micro co-ax methods of the transceiver module, according to one example of the embodiment. According to one example embodiment, the micro co-ax method includes a Quad Flat No-lead package (QFN) inside which the components are interconnected to form a complete optical transceiver system. The VCSELs (Vertical Cavity Surface Emitting Lasers) are driven by the driver IC that modulates the electrical signals received from an external source to control the light emitted by VCSELs. The emitted light is then directed into the optical fiber through the fiber ferrule attach that ensures accurate alignment for efficient transmission.

In some example embodiments, the process of making a wire bond to a micro-coaxial cable begins with careful preparation of the cable. First, the micro-coax is cut to the desired length, and the outer insulation layer is stripped away using a coaxial cable stripper to expose the shield layer. The braided shield is either removed or folded back to expose the dielectric layer, which is carefully stripped to reveal the inner conductor. Precision is essential here, so a micro-stripping tool and a microscope are often used to prevent damage to the delicate layers.

In some example embodiments, once the inner conductor is exposed, it may be tinned with a thin layer of solder to aid the bonding process. The prepared micro-coax cable is then placed in a stable bonding jig, with the conductor aligned to the bonding pad of the device or PCB. The wire bonding process, typically ultrasonic or thermoscopic bonding, applies ultrasonic energy and/or heat to create a reliable connection between the micro-coax conductor and the bonding pad. In cases where ultrasonic bonding is not used, thermal compression bonding with heat and pressure may be applied. After the bond is made, a pull or shear test ensures the mechanical integrity of the bond.

In some example embodiments, the final step involves bonding the cable's outer shield to the ground if required. This can be done through soldering or another wire bonding method. Afterward, the bond is visually inspected under a microscope for accuracy and checked through electrical testing to verify signal integrity. The combination of mechanical and electrical testing ensures that the wire bond to the micro-coax meets the necessary specifications for performance and reliability.

In some example embodiments, at the receiving end the incoming optical signals from the fiber are captured by a plurality of photodetectors 107 that convert optical signals back into electrical signals. These weak electrical signals are amplified by the Transimpedance Amplifier (TIA), boosting them to usable levels for further processing or transmission within the system. These components enable bidirectional optical communication by transmitting and receiving data via light through optical fiber.

In some example embodiments, the Quad Flat No-lead (QFN) package is a popular surface-mount component used in optoelectronics due to its compact size, excellent thermal performance, and low parasitic inductance. This package features a flat, leadless design where the electrical connections are made through contact pads on the bottom of the package, allowing for minimal space usage on printed circuit boards (PCBs). In optoelectronic applications, QFN packages are particularly useful because they provide a low-profile solution for mounting components like laser drivers, photodetectors, and transceivers, where both electrical and thermal efficiency are critical for performance.

In some example embodiments, addition to its small form factor, the QFN package is favored in optoelectronics for its efficient heat dissipation, facilitated by an exposed metal pad on the underside, which can be soldered directly to the PCB. This design helps manage the heat generated by high-speed optoelectronic devices, improving their reliability and lifespan. The QFN's low parasitic inductance ensures minimal signal distortion, which is essential in high-frequency optoelectronic circuits, making it a reliable choice for applications like data transmission and optical communication systems.

According to one example embodiment, glass interposer in a transceiver module is a thin layer of glass-based material that provides a medium for electrical and optical signal interconnection between components like lasers, modulators, and receivers. It allows for high-density connections due to its micro-vias and fine pitch, and due to its low Coefficient of Thermal Expansion (CTE) like that of silicon, there is reduced thermal stress. Thus, possessing good dielectric properties, it may enable proper signal transmission as well as be highly efficient in high-frequency tracks. When implemented in miniaturized transceiver modules, glass interposers may manage signal and power paths intelligently, enhancing signal integrity and miniaturization while providing efficient thermal management for highly complex optical communication systems.

According to one example embodiment, wire bond may be used to connect TIA and Driver IC to the QFN package or to ground similarly, to ground to the QFN package. Wire bonding may be described as an essential process of making electrical connections between an integrated circuit or a semiconductor chip and the external leads or other circuits. The connections usually take place in semiconductor packages or in printed circuit boards (PCBs). It utilizes ultra-fine wires which may be constituted of gold, aluminum, or copper that interconnect the terminal of the chip with the lead of the package. This process is important to provide the electrical interface between the chip and its real environment of operation. Wire bonding is significantly used because of its efficiency, low costs, and ability to settle high-frequency signals. It also provides design flexibility for the incorporation of advanced chip designs, it is widely used in several electronic products for instance microprocessors, sensors, & RF modules.

According to one example embodiment, microcontroller is in a transceiver module which is primarily responsible for managing or controlling certain functions. It facilitates proper interaction between the components such as the Transimpedance Amplifier (TIA) and the driver IC. In addition to this, it handles signals to enhance the performance of the device. The microcontroller supervises operations in real time, conducts diagnostic tests, and controls the parameters to ensure the reliability of the systems. Besides that, it controls power to manage energy consumption, and it allows firmware upgrades for setting up the system. In general, the microcontroller is responsible for controlling the tasks, improving the capabilities of the module, and maintaining optimal signal transmit and receive.

According to one example embodiment, in the transceiver module rather than using a single coupling capacitor, it employs a first set of AC coupling capacitors, a second set of AC coupling capacitors and a third set of AC coupling capacitors to filter out the DC component of the signal while passing the AC component per channel, including high-speed data signals through it. This is particularly important for high-frequency communication systems where the presence of DC offset affects the quality of data to be transmitted. The AC coupling capacitors also assist in the suppression of excessive levels of voltage that might damage sensitive components in the signal path as well as allow conversion between circuits that have different DC levels. The transceiver uses many capacitors to minimize noise and generally increase the effectiveness of optical or electrical communication systems.

According to one example embodiment, fiber ferrule is an important part of fiber optic connectors **300,** which is used for the purpose of placing and holding the fiber core in its right position (aligned) when it is being connected. It may include one or more but is not limited to ceramic, metal, or plastic in construction, but the core purpose is to guide the optical fiber and bring out its end face to a smooth and highly polished state to let light pass through it in the best way possible. The ferrule helps minimize signal loss by bringing fiber ends as close as possible to each other so that there is no reflection or much attenuation at the joint. The ideal and most accurate method of connecting the fiber to the ferrule is crucial in guaranteeing optimal performance of fibers and is frequently utilized in patch cables, transceivers, and other fiber optic communication systems with a high probability of high precision and low loss.

According to one example embodiment, the QFN package is very efficient in terms of heat dissipation at the higher frequencies as well, because of its exposed thermal pad which can be soldered directly to a heat sink or PCB. This design also assists in diverting heat from sensitive components, particularly the driver IC, and maintains the system's thermal rating during high-speed mode. In addition to the result of the electrical connection, the VCSELs is mounted on the driver IC so that it can improve the thermal consideration as well. When it comes to more sophisticated packaging and thermal compensating methods, the outcome will enable greater efficiency operating in high-speed optical communication systems including 100G transceivers, which can deliver higher throughput rates yet remain stable and reliable.

According to one example of the embodiment, the design eliminates the use of a first set of AC coupling capacitors a second set of AC coupling capacitors and a third set of AC coupling capacitors. However, the redistribution layer (RDL) lines are directly routed on the glass substrate and thereafter wire-bonded to Quad Flat No-lead (QFN) package.

According to one example of the embodiment, the driver and transimpedance amplifier (TIA) integrated circuits are filp-chip bonded in place of conventional wire-bond configuration. The vertical-cavity surface-emitting laser (VCSEL) and photodetector (PD) are connected using wire-bonding. The configuration is implemented to reduce the inductance on the high-speed signal pathways.

According to one example embodiment, a single substrate is employed instead of conventional dual-substrate configuration comprising glass and Quad Flat NO-lead (QFN). The redistribution layer (RDL) is integrated onto the single substrate. The driver integrated circuit (IC), transimpedance amplifier (TIA), vertical-cavity surface-emitting laser (VCSEL), and photodetector (PD) are directly mounted onto the substrate using epoxy or die attach films. These components are subsequently wire-bonded directly onto the substrate. Furthermore, the substrate is designed to be directly solderable onto a printed circuit board (PCB), streamlining the assembly process.

According to some example embodiment, the glass substrate is extended to cover internal PADS of the QFN package. Instead of utilizing wire bonds (213B) to connect the glass substrate to the QFN package the design incorporates through-glass vias along with a bump structure on the underside of the glass substrate. The bump structure is configured to be directly soldered onto the PADS of the QFN package thereby enabling a more streamlined and reliable connection.

According to some example embodiments, the present disclosure relates to a compact multi-channel optical transceiver module 100 that enables high-speed, bidirectional data communication through an integrated, miniaturized, and solderable design. Built in a QFN 64-pin package with a 0.5 mm pitch and thermal ground pad, the module offers a minimal PCB footprint of 9 mm × 9 mm (81 mm²). It supports 106.25 Gb/s PAM4 electrical interfaces across four transmit and four receive channels, collectively achieving superior multichannel optical communication performance for short-reach (SR4) applications. The module leverages a surface-mount transceiver architecture, allowing for standard SMT integration directly onto printed circuit boards. This configuration enhances data center connectivity by eliminating bulky pluggable optics, and enables scalable deployment in environments such as Ethernet, PCIe, InfiniBand, and optical backplane interconnects.

According to some example embodiments, the system provides seamless support for optical interconnects through clip-on fiber interfaces like USCONEC PRIZM^{®} LightTurn^{®} and MPO-12 receptacles, ensuring precise alignment and low insertion loss. The transceiver is engineered for thermal management in optoelectronics, featuring a dedicated QFN heatsink design that ensures reliable operation under high-speed workloads. Its low power consumption (~2W) further contributes to energy-efficient deployment in high-density environments. By combining VCSEL-based transmission and photodetector-based reception within a compact, solderable optical engine, the transceiver module **100A/100B** addresses key industry demands for size, performance, and integration, supporting next-generation data center and computer architectures.

The many features and advantages of the invention are apparent from the detailed specification, and thus, the claims intend to cover all such features and advantages of the invention that fall within the true spirit and scope of the invention. Further, since numerous modifications and variations will readily occur to those skilled in the art, it is not desired to limit the invention to the exact construction and operation illustrated and described, and accordingly, all suitable modifications and equivalents may be resorted to, falling within the scope of the invention.

## Claims

1. A compact multi-channel optical transceiver system (**100**), comprising:
a compact multi-channel optical transceiver module (**100A/100B**), comprising,
a substrate **103,** configured to embed and support a plurality of components, wherein the plurality of components includes,
a driver integrated circuit **209A,** embedded within the substrate **103,** and configured to modulate a plurality of electrical input signals into a plurality of modulated output signals;
a transimpedance amplifier **209B,** embedded within the substate **103** and configured to amplify a plurality of electrical signals generated from a plurality of optical signals;
a plurality of transmitter engines **207A,** embedded within the substrate **103,** and operatively coupled to the driver integrated circuit **209A,** each transmitter engine configured to emit an optical signal in response to a corresponding modulated electrical signal from the driver integrated circuit **209A;**
a plurality of receiver engines **207B,** embedded within the substrate **103,** and operatively coupled to the transimpedance amplifier **209B,** each photodetector being configured to receive an optical signal and convert it into a corresponding electrical signal;
a microcontroller **201,** embedded within the substrate **103,** and configured to monitor and control operational states of the driver integrated circuit **209A,** transimpedance amplifier **209B,** the plurality of transmitter engines **207A,** and the plurality of receiver engines **207B;**
a first plurality of high-speed lanes **211A,** embedded within the substrate **103,** configured to electrically interconnect the driver integrated circuit **209A** with the plurality of transmitter engines **207A;**
a second plurality of high-speed lanes **211B,** embedded within the substrate 103, configured to electrically interconnect the transimpedance amplifier **209B** with the plurality of receiver engine **207B;**
a plurality of wire bonds, configured to electrically couple the plurality of components embedded on the substrate **103,** wherein the plurality of wire bonds includes connections between a plurality of transmitter engines **207A** to the driver integrated circuit **209A** and the plurality of receiver engines **207B** to the transimpedance amplifier **209B,** and the microcontroller **201;** and
a ground **213,** integrated into the substrate **103,** configured to provide signal reference and facilitate thermal dissipation;
a Mechanical Optical Interface (MOI) **301,** positioned on or above the substrate **103,** and configured to provide mechanical alignment between the plurality of transmitter engines **207A** and the plurality of receiver engines **207B,** and a plurality of optical fibers **107;**
a ferrule **105,** configured to hold and align the plurality of optical fibers **107** in optical alignment with the Mechanical Optical Interface (MOI) **301;** and
a fiber clip **303,** configured to retain the ferrule **105** in fixed mechanical and optical alignment with the Mechanical Optical Interface (MOI) **301,** thereby ensuring stable optical coupling between the plurality of optical fibers **107** and the optoelectronic components embedded in the substrate **103;**
wherein the first end of the plurality of optical fibers **107** is inserted into and positioned by the ferrule **105,** and optically aligned through the Mechanical Optical Interface (MOI) with the plurality of transmitter engines **207A** and the plurality of photodetectors **207B** and second end of the plurality of optical fibers **107** connected to the external optical connector **300,** configured to interface with an external optical communication system.
wherein the compact multi-channel optical transceiver system **100** is configured to enable high-speed, multi-channel bidirectional optical communication in a compact, surface-mountable form factor.

2. The system **100** as claimed in claim 1, wherein the compact multi-channel optical transceiver module **(100A/100B)** includes,
- embedding the plurality of transmitter engines **207A,** comprising four VCSEL-based transmit channels, the plurality of receiver engines **207B** comprising four photodetector-based receive channels, the driver integrated circuit **209A,** the transimpedance amplifier **209B,** and a microcontroller **201** within the substrate **103**
- electrically coupling the embedded components using the plurality of wire bonds;
- forming the first plurality of high-speed lanes **211A** and a second plurality of high-speed lanes **211B** within the substrate **103,** configured to route the plurality of signals between the driver integrated circuit **209A,** transimpedance amplifier **209B,** and the plurality of transmitter engines **207A** and the plurality of receiver engines **207B,** thereby enabling high-speed bidirectional communication at 106.25 Gb/s PAM4 per channel.

3. The system **100** as claimed in claim 1, wherein the substrate **103** is configured with a central thermal ground pad in a QFN 64-pin package having a 9 mm × 9 mm footprint (81 mm²), the central thermal ground pad being adapted to facilitate efficient heat dissipation from the driver integrated circuit **209A,** transimpedance amplifier **209B,** and a plurality of embedded components during high-speed data transmission, at rates of up to 106.25 Gb/s PAM4 per channel, while maintaining a total module power consumption of about 2 W.

4. The system **100** as claimed in claim 1, wherein the plurality of optical fibers **107** are configured as multimode fibers in an MPO-12 ribbon array, adapted to:
- receive the plurality of optical signals from the plurality of transmitter engines **207A** at a first end via the MOI,
- deliver the plurality of signals to an external optical communication system via the external optical connector **300** at a second end.

5. The system **100** as claimed in claim 1, wherein the ferrule **105** is retained in fixed mechanical and optical alignment with the MOI using the fiber clip **303,** thereby ensuring consistent alignment of the optical fiber cores with the VCSELs **207A** and photodetectors **207B** with an optical coupling loss of less than 2 dB during high-speed operation.

6. A method for high-speed optical data transmission using a compact multi-channel optical transceiver module, comprising:
a) receiving **401,** a first plurality of electrical input signals at a driver integrated circuit **209A** embedded within the compact multi-channel optical transceiver module (**100A/100B**), and modulating the first plurality of electrical input signals into first plurality of optical signals for transmission;
b) transmitting **403,** the first plurality of modulated optical signals through a plurality of transmitter engines **207A,** to emit a corresponding plurality of optical signals across multiple transmission channels;
c) directing **405,** the emitted first plurality of optical signals through a plurality of optical fibers **107** connected to the compact multi-channel optical transceiver module (**100A/100B**) via a ferrule **105** and mechanical optical interface (MOI) 301, ensuring precise optical alignment and minimal signal loss during transmission;
d) receiving **407,** a second plurality of optical signals incoming through the plurality of optical fibers **107,** using a plurality of receiver engines **207B,** embedded within the compact multi-channel optical transceiver module (**100A/100B**), each corresponding to one of the pluralities of receiving channels;
e) converting **409,** the second plurality of optical signals into the second plurality of electrical signals using the photodetectors **207B** and amplifying the electrical signals using a transimpedance amplifier **209B** embedded within the module to ensure they are at a sufficient voltage level for further processing; and
f) routing **411,** the amplified second plurality of electrical signals through first plurality of high-speed lanes **211A** and second plurality of high-speed lanes **211B** within the substrate **103,** ensuring signal integrity and efficient transmission to external systems.

7. The method as claimed in claim 6, wherein the first plurality of optical signals is transmitted through the plurality of transmitter engines **207A,** comprising four Vertical Cavity Surface Emitting Lasers (VCSELs), each configured to operate at a data rate of 106.25 Gb/s PAM4 per channel, thereby emitting corresponding optical signals across four transmission channels for high-speed bidirectional communication.

8. The method as claimed in claim 6, wherein a power consumption of the compact multi-channel optical transceiver module **100A/100B** is synchronized and controlled using a microcontroller **201,** such that the total module power is maintained at about 2 W during high-speed data transmission at 106.25 Gb/s PAM4 per channel across four transmit and four receive channels, thereby optimizing performance and thermal stability.

9. The method as claimed in claim 6, wherein the second plurality of optical signals is received through the plurality of optical fibers **107** using a plurality of receiver engines **207B,** such as photodetectors **207B,** embedded within the compact multi-channel optical transceiver module **100A/100B.**

10. The method as claimed in claim 6, wherein the compact multi-channel optical transceiver module **100A/100B** is designed to manage thermal dissipation through efficient substrate **103** and PCB design, utilizing a central thermal ground pad in a QFN 64-pin package having a 9 mm × 9 mm footprint (81 mm²) , the central thermal ground pad being adapted to dissipate heat generated during high-speed data transmission.
